# EUROPEAN PATENT SPECIFICATION

(11) **EP 3 086 934 B1**
(45) Date of publication and mention of the grant of the patent: **20.01.2021**
(21) Application number: 14873619.2
(22) Date of filing: 16.12.2014
(51) Int. Cl.: B29D 30/54

(54) **SYSTEM AND METHOD FOR FORMING RETREAD TIRES USING FLAT BACKED TREAD AND RETREADED TIRE**
SYSTEM UND VERFAHREN ZUR HERSTELLUNG VON RUNDERNEUERTEN REIFEN MIT FLACHER BESCHICHTETER LAUFFLÄCHE UND RUNDERNEUERTER REIFEN
SYSTÈME ET PROCÉDÉ DE FORMATION DE PNEUMATIQUES RECHAPÉS EN UTILISANT DES BANDES DE ROULEMENT À FOND PLAT ET PNEUMATIQUE RECHAPÉ

(30) Priority: 27.12.2013 US 201361921139 P
(43) Date of publication of application: 02.11.2016
(73) Proprietor: Bridgestone Bandag, LLC, Muscatine, IA 52761 (US)
(72) Inventor: WESTAWAY, Terry A., Conesville, Iowa 52739 (US); OTTING, Robert G., Illinois City, Illinois 61259 (US)
(74) Representative: Oxley, Robin John George
(86) International application number: PCT/US2014/070471
(87) International publication number: WO 2015/100059

(56) References cited:
- EP-A1- 3 049 258
- WO-A2-2013/130070
- AU-B2- 293 211
- JP-A- H0 596 654
- JP-A- H06 191 221
- JP-A- H08 104 108
- US-A1- 2009 199 944
- US-A1- 2013 276 944

## Description

### BACKGROUND

The present invention relates generally to tire retreading, and more particularly to a system and a method for retreading a tire and a retreaded tire.

When a tire becomes worn, worn tread can be replaced using a process known as retreading. Such retreading can include a mechanical buffing process to remove worn tire tread from the tire casing. The buffing process allows for the tire casing to be buffed to a desired size, shape and texture. A tire tread can then be applied to the buffed casing. For example, a pre-cured tire tread having a desired tread design on an outer surface can be applied or positioned on the buffed casing. An adhesive layer such as an uncured rubber compound may be applied between the tread and the casing to facilitate adhesion between the tread and the casing. The assembly, including the casing and the tread, may then be cured or vulcanized in a curing chamber such as an autoclave. A retreaded tire may thereby be manufactured.

Retreading processes have involved bonding a tread to a tire casing that is buffed flat or with a continuously arched profile. The tread includes a front face that contacts the ground and provides traction, and a back face that may be bonded to the tire casing. Grooves may be provided in the front face of the tread as part of the tread design.

The tire tread volume needed to produce a retreaded tire with sufficient tread groove depth can be a significant cost. As such it is desirable to reduce the volume of material needed for a tire tread, yet maintain or even improve the wear volume of the tire tread (e.g., usable volume of tread material that may be worn until the depth of the exposed tread grooves is reduced to a point that the tire needs to be taken out of service and discarded or retreaded). Accordingly, it is desirable to provide retreaded tires having optimized tread wear volume and compliant tread groove depth, as well as systems and methods for manufacturing retreaded tires with optimized tread wear volume and compliant tread groove depth.
Reference is made to WO 2013/130070, AU293211, EP 3049258 (Art. 54(3)-EPC-document) and US 2013/276944.

### BRIEF SUMMARY

The present invention relates generally to tire retreading, and more particularly to a system and a method for retreading a tire and a retreaded tire. The method and system is provided for retreading a tire using a pre-cured tread band having a substantially smooth back face and one or more tread grooves on a front face, the substantially smooth profile on the back side of the tire tread having no discontinuities. The grooves in the pre-cured tread band align with grooves in a tire casing and, in the process of curing, the substantially smooth back face may conform to the shape of the casing groove thereby forming a synergistic new groove. The retreaded tires advantageously have compliant skid base gauges with tire tread depths greater than the original tire tread depth of the pre-cured tread band, thereby increasing the wear volume of the tire tread.

According to one aspect of the invention, a method of retreading a tire according to claim 1 is provided. The method includes providing a tire casing having a casing profile with at least one casing groove, the at least one casing groove having a casing groove depth and a casing groove shape, and providing a tire tread having a substantially smooth profile on a back side and at least one tread groove on a front side, the at least one tread groove having an initial tread groove depth, the substantially smooth profile on the back side of the tire tread having no discontinuities. The method also includes aligning the tire tread on the tire casing to produce a tire assembly, wherein the substantially smooth profile on the back side of the tire tread faces the tire casing and wherein the at least one tread groove on the front side of the tire tread aligns with the at least one casing groove, and curing the tire assembly under pressure such that the back side of the tire tread conforms to at least a portion of the casing profile whereby the at least one tread groove conforms to the casing groove depth and the casing groove shape such that a final depth of the tread groove is greater than the initial tread groove depth.

According to another aspect of the invention, a retreaded tire according to claim 10 is provided. The retreaded tire includes a tire casing with sidewalls, and a tire tread cured to the tire casing, the tire tread having a final tread groove depth greater than an initial tire tread groove depth, where the tire tread has been joined to the tire casing by curing a tire assembly under elevated pressure and temperature. In curing, the assembly may have included at least a tire casing component and a tire tread component, the tire tread component having had a substantially smooth profile on a back side and at least one tread groove on a front side with an initial tire tread groove depth, the substantially smooth profile on the back side of the tire tread having no discontinuities, and the tire casing component having had a casing profile with at least one casing groove with a casing groove depth, and where the substantially smooth back side of the tire tread component faced the tire casing component and where the at least one tread groove was aligned with the at least one casing groove.

According to yet another aspect of the present invention, a system for retreading a tire casing according to claim 16 is provided. The system includes a vessel, a pressure source operable to increase pressure within the vessel, a heat source operable to increase a temperature within the vessel, and a tire assembly. The tire assembly may include a tire tread having a substantially smooth back side and at least one tread groove on a front side, the substantially smooth profile on the back side of the tire tread having no discontinuities, at least one tread groove having an initial tread groove depth, and a tire casing having a casing profile with at least one casing groove with a casing groove depth. The tire tread is positioned on the tire casing such that the substantially smooth back side of the tire tread faces the tire casing and wherein the at least one tread groove is aligned with the at least one casing groove. The the pre-cured tire assembly is provided in the vessel and the pressure and temperature are increased, the tread back side will conform to the casing profile and the shape of the casing groove in a manner such that a final depth of the tread groove is greater than the initial tread groove depth.

Reference to the remaining portions of the specification, including the drawings and claims, will realize other features and advantages of the present disclosure. Further features and advantages of the present disclosure, as well as the structure and operation of various embodiments of the present disclosure, are described in detail below with respect to the accompanying drawings. In the drawings, like reference numbers indicate identical or functionally similar elements.

### BRIEF DESCRIPTION OF THE DRAWING(S)

Figure 1 illustrates a partial cross-sectional view of separated components of a tire assembly according to an embodiment.
Figure 2 illustrates a partial cross sectional view of tire assembly prior to curing, according to an embodiment.
Figure 3 illustrates a partial cross sectional view of a retreaded tire after the tire assembly of Figure 2 is cured, according to an embodiment.
Figure 4 illustrates a method of retreading a tire according to an embodiment.

### DETAILED DESCRIPTION

Retreaded tires and methods for forming the same are described. According to certain example embodiments, a tire is retreaded with a tread band having a substantially smooth back face and one or more tread grooves with compliant skid base gauge on a front face. The grooves in the tread band are operable to align with grooves in a tire casing and upon curing may conform to the shape of the casing grooves. Retreaded tires advantageously may have compliant skid base gauges with groove depths greater than the original groove depth of the tread band, thereby increasing the wear volume of the tire tread. In certain aspects, the tread band may be pre-cured, and in other aspects, the tread band may be uncured. In general, the present disclosure is applicable to any type of retreading process.

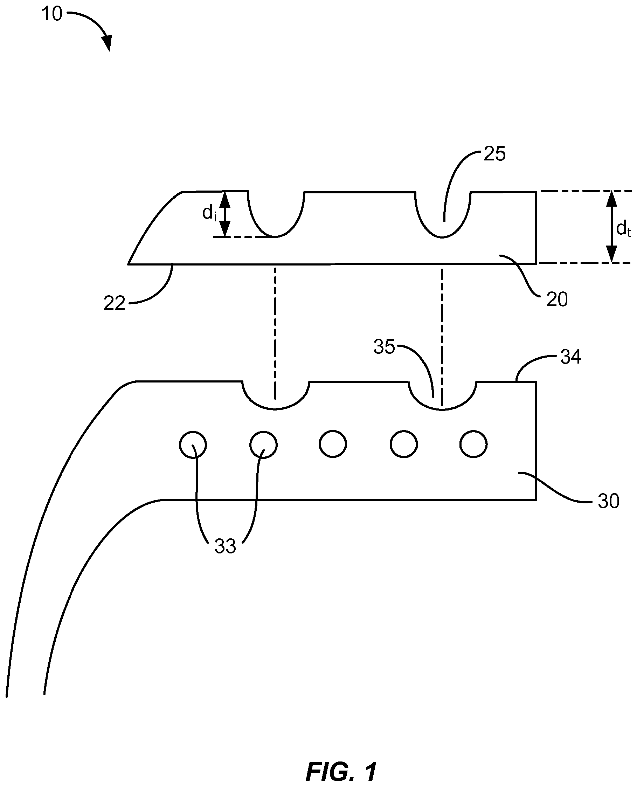

Figure 1 illustrates a partial cross-sectional view of separated components of a tire assembly 10 according to an embodiment. Tire assembly 10 includes a tread 20 and a tire casing 30. Tire casing 30 includes a buffed front face 34 having one or more pre-formed grooves 35. Grooves 35 may include pre-existing grooves in the casing, or they may be created during a buffing process. The grooves are depicted with a curved profile, although other profiles are possible as would be understood, such as rectangular, triangular, polygonal, etc. Tire casing 30 also typically includes a wire band including one or more wires or belts 33 embedded in the casing. Tire tread 20 has a substantially smooth back face 22 and one or more tread grooves 25 on a front face 24. It should be understood that the terms "face" and "side" are used interchangeably herein when discussing tire components such as a tire tread. Each tread groove 25 has a tread profile including an initial tread groove depth, dᵢ. Similar to the casing grooves, the tread grooves are depicted with a curved profile, although other profiles are possible as would be understood, such as rectangular, triangular, polygonal, etc. Moreover, while the groove profiles are shown to coincide (e.g., both are curved), the grooves may be of other profile combinations still aligning with each other. The initial tread groove depth, dᵢ, is less than the tread band depth or thickness, dₜ, as shown (not to scale), where the difference, dₜ - dᵢ, will typically be in the range near 0.79mm (1/32").

Where more than one tread groove is present, each groove may have the same profile (cross sectional shape and initial tread groove depth), or some or all tread grooves may have different profiles. In certain aspects, the one or more tread grooves are circumferential grooves, e.g., running parallel to a centerline of the tire. The one or more tread grooves may include lateral tread grooves, e.g., grooves having a directional component at an angle between about 1° and 90° (fully perpendicular to the centerline) with respect to the centerline of the tire. It should be appreciated that the profile of a particular tread groove may change along a length of the groove.

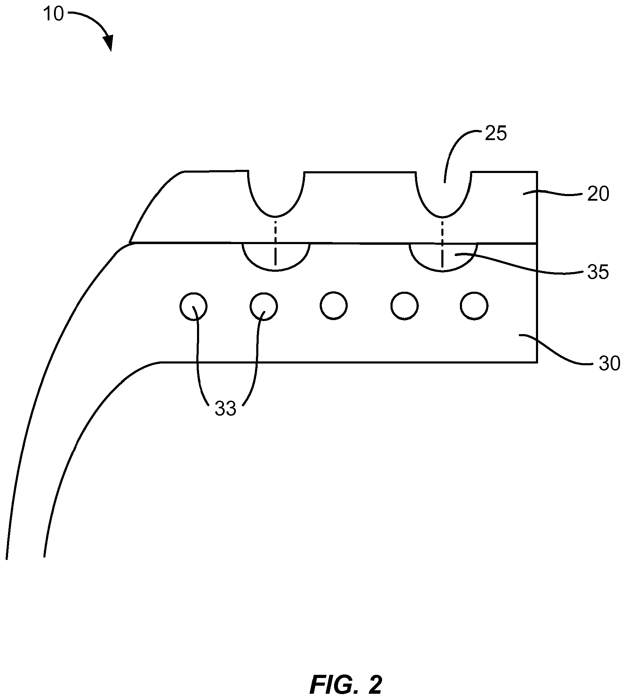

Figure 2 illustrates a partial cross sectional view of tire assembly 10 prior to curing according to an embodiment. As shown, tread 20 is positioned on casing 30 such that the substantially smooth back face 22 of tread 20 faces the exposed front face of the tire casing 30 with the one or more tread grooves 25 aligned with the one or more casing grooves 35 in the buffed tire casing 30. For example, a centerline of a groove having a symmetrical profile is substantially aligned with a centerline of a symmetrical casing groove as shown (dotted line). A bonding layer (not shown) may be provided between tire tread 20 and tire casing 30. The bonding layer may include a rubber compound or cement layer that facilitates bonding of the tread to the casing as is well known. Examples of useful materials for the bonding layer include uncured rubber compounds and mixtures thereof. As shown in Figure 2, when tread 20 is positioned and aligned, one or more gaps or spaces are present between the back face 22 and tread 20, and are defined by the casing groove(s) 35.

A substantially smooth back face according to the present invention includes a back face surface that has some amount of roughness or granularity as determined by the rubber composition used and the extruding process used to create the tread band, and any pre-assembly processing and the like. In general, the entire back side 22 may be flat (e.g., by comparison to the casing including the noted groove(s)) when positioned on a flat surface, however, due to the flexibility of rubber materials typically used, the substantially smooth back will bend to accommodate a curved surface, e.g., a curved casing profile. The substantially smooth back side generally has a smooth and continuous surface contour over the entire profile of the tread or in a region proximal to the bottom of the at least one tread grooves. The substantially smooth region is devoid of protrusions extending from the back side, e.g., no premolded shapes or discontinuous surface features on the back side in proximity of the tread groove. It should be appreciated that a substantially smooth back face of the present invention does not preclude intentional protrusions or grooves in the back face that do not interfere with the tread groove and casing groove alignment, e.g., an alignment feature or protrusion, which extends outward or inward from the back face 22 and which may be positioned to facilitate attachment or alignment of the tire tread on the casing by mating with a complementary groove or feature on the casing, may be present away from the groove alignment region(s). Hence, a substantially smooth profile on the back side of a tread may include a surface contour that is substantially flat with no discontinuities, and it may include a curved surface with no discontinuities present.

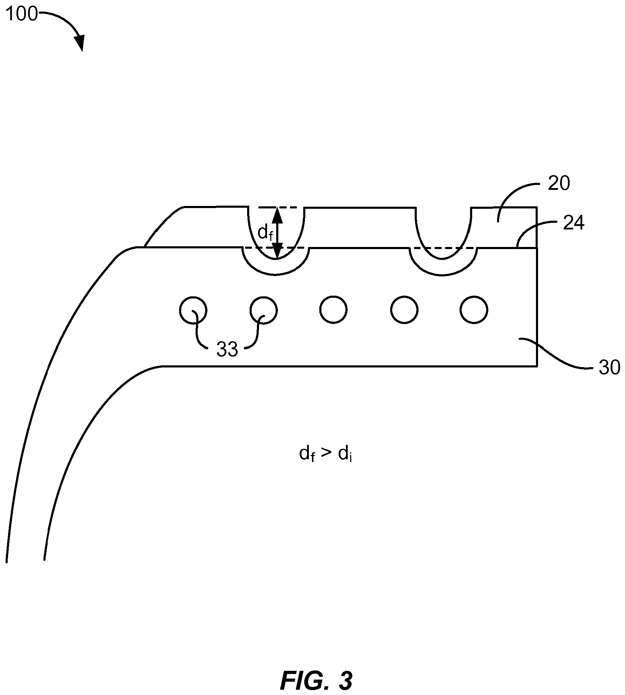

The tire assembly 10 shown in Figure 2 is subjected to a curing process as will be described in more detail below. Figure 3 illustrates a partial cross sectional view of a retreaded tire 100 after tire assembly 10 of Figure 2 is cured, according to an embodiment. Retreaded tire 100 includes a tread groove having a final tread groove depth, d_{f}, that is greater than the initial groove depth, dᵢ, of tire tread 20

During the curing process, the bottom portion of the tread groove 22 conforms to the profile of the casing groove 35. Due to the increased pressure during curing, the bottom portion of the tread groove experiences a negative deformation or distortion and moves down into the casing groove, and the tread groove depth increases; the rubber material at the tread groove bottom, having a thickness dₜ - dᵢ, may also become thinner to some extent sometimes following Poisson's ratio such that the tread groove depth increases further.

The casing groove depth may be any depth as is practicable given the particular application. In certain aspects, for example, the desired casing groove depth is less than about 3.97mm (5/32"), e.g., between about 1.59mm (2/32") and about 3.97mm (5/32") for standard truck tires. Optimally, the casing groove depth is about 2.38mm (3/32"). Depending on the depth of the casing groove, dᵢ, the final tread groove depth will increase relative to the initial tread groove depth. For example, where the casing groove depth is approximately 2.38mm (3/32") deep, the tread groove depth may increase by about 1.59mm (2/32") or more, depending in part on the various system parameters, such as the mechanical properties of the rubber composition of the tire tread as well as the pressure and temperature at which the tire assembly is cured. For example, an initial tread groove depth of about 11.11mm (14/32") may increase to about 12.7mm (16/32"). For a casing groove depth of about 2.38mm (3/32"), tread grooves having initial depths of between about 7.15mm (9/32") and about 20.6mm (26/32") may increase to between about 8.73mm (11/32") and about 22.22mm (28/32").

Various embodiments allow for the wear volume of a tire tread to be increased. For example, where a flat back tire tread is cured to a flat casing profile, the final tread groove depth will be substantially the same as the initial tread groove depth. As can be seen in Figure 3, according to an embodiment, the final tread depth d_{f} can extend below the casing face 24. The entire volume of the tread therefore becomes part of the wear volume for the end user, i.e., the wear volume can be more efficient. As the tire tread wears during use, the life of the tire tread is extended, and indeed the rubber of the tire casing could be used as part of the wear volume as the tread becomes completely worn out with skid base gauge remaining. In this manner, a substantially smooth back tread product, such as a flat back tread product, having a reduced tread volume can be used to produce a retreaded tire having the same or a greater tread groove depth as compared with prior processes using a tread product having more tread volume yet with the same initial and final tread groove depth. This permits less of the tire casing to be buffed away during the retreading process, thereby conserving materials. This can provide a cost savings due to reduced material volume needed to create a desired usable tread groove depth in a retreaded tire.

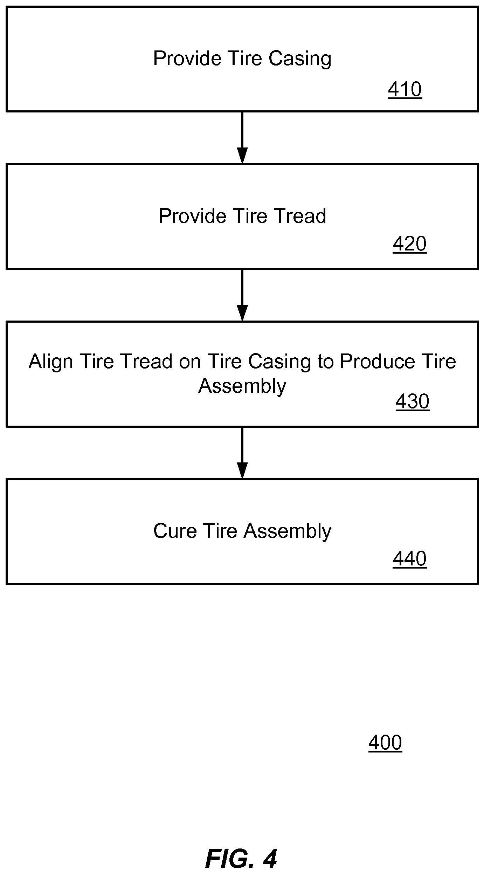

Figure 4 illustrates a method 400 of retreading a tire according to an embodiment. In step 410 a tire casing is provided. The tire casing may be provided pre-buffed with a desired shape, or it may be buffed to remove any worn tread, and shaped as desired. For example, a tire casing may be buffed to produce a casing profile with at least one casing groove having a specified groove depth and a casing groove shape. In step 420, a tire tread is provided, which has a substantially smooth profile on a back side and a tread groove pattern having at least one tread groove on a front side. The at least one tread groove has an initial tread groove depth, dᵢ.

In step 430, the tire tread is placed or positioned on the tire casing such that the substantially smooth profile on the back side of the tire tread faces the tire casing and the at least one tread groove on the front side of the tire tread is aligned with the at least one casing groove. The alignment step 430 produces a tire assembly. A step of applying or placing a bonding material between the tire casing and the tire tread may be performed prior curing, e.g., prior to alignment step 430. The bonding material facilitates attachment or bonding of the tire tread to the casing during the curing process. In step 440, the tire assembly is cured. For example, the tire assembly is cured under pressure in a chamber or vessel such as an autoclave. The chamber or vessel may have a pressure source operable to adjust the pressure within the vessel and a heat source operable to adjust the temperature within the vessel. Curing typically includes increasing the pressure and the temperature within the curing chamber or vessel. In association with the curing process, the back side of the tire tread conforms to the casing profile. For example, the at least one tread groove conforms to the casing groove depth and the casing groove shape such that the final depth, d_{f}, of the tread groove is greater than the initial tread groove depth, dᵢ.

The use of the terms "a" and "an" and "the" and "at least one" and similar referents in the context of describing the embodiments (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein.

Exemplary embodiments are described herein, including the best mode known to the inventors. Variations of those embodiments may become apparent to those of ordinary skill in the art upon reading the foregoing description. The inventors expect skilled artisans to employ such variations as appropriate, and the inventors intend for the embodiments to be practiced otherwise than as specifically described herein. Accordingly, all modifications and equivalents of the subject matter recited in the claims appended hereto are included as permitted by applicable law.

## Claims

1. A method of retreading a tire, the method comprising:
providing a tire casing (30) having a casing profile with at least one casing groove (35), said at least one casing groove (35) having a casing groove depth and a casing groove shape;
providing a tire tread (20) having a substantially smooth profile on a back side (24) and at least one tread groove (25) on a front side, the at least one tread groove (25) having an initial tread groove depth (di), the substantially smooth profile on the back side (24) of the tire tread (20) having no discontinuities;
aligning the tire tread (20) on the tire casing (30) to produce a tire assembly, wherein the substantially smooth profile on the back side (24) of the tire tread (20) faces the tire casing (30) and wherein the at least one tread groove (25) on the front side of the tire tread (20) aligns with the at least one casing groove (35);
curing the tire assembly under pressure such that the back side (24) of the tire tread (20) conforms to at least a portion of the casing profile whereby the at least one tread groove (25) conforms to the casing groove depth and the casing groove shape such that a final depth (d_{f}) of the tread groove (25) is greater than the initial tread groove depth (dᵢ).

2. The method recited in claim 1, wherein the at least one casing groove (35) and the at least one tread groove (25) are circumferential grooves, and wherein the tire tread (20) includes at least one lateral groove.

3. The method recited in claim 1, further including buffing a tire casing to produce the tire casing (30) having the casing profile with at least one casing groove (35).

4. The method recited in claim 1, further including placing a bonding material between the tire casing (30) and the tire tread (20) prior to curing.

5. The method recited in claim 4, wherein curing under pressure includes increasing pressure and temperature so that the bonding material facilitates attachment of the tire tread (20) to the tire casing (30).

6. The method recited in claim 1, wherein a thickness of the tire tread groove (25) between a bottom of the tire tread groove (25) and the back side (24) becomes thinner as the tread back side (24) conforms to the casing profile.

7. The method recited in claim 1, wherein the casing groove depth is less than 3.97 mm (5/32").

8. The method recited in claim 7, wherein the final depth (d_{f}) of the tread groove (25) is between 8.74 mm (11/32") and 22.2 mm (28/32").

9. The method recited in claim 7, wherein the initial tread groove depth (dᵢ) is 11.1 mm (14/32") and wherein the final depth (d_{f}) of the tread groove (25) is 12.7 mm (16/32").

10. A retreaded tire comprising:
a tire casing (30) including sidewalls;
a tire tread (20) cured to the tire casing (30), the tire tread (20) having a final tread groove depth (d_{f}) greater than an initial tire tread groove depth (dᵢ),
wherein the tire tread (20) has been joined to the tire casing (30) by curing a tire assembly under pressure, such assembly having included at least a tire casing component (30) and a tire tread component (20), the tire tread component (20) having had a substantially smooth profile on a back side (24) and at least one tread groove (25) on a front side with an initial tire tread groove depth (dᵢ), the substantially smooth profile on the back side (24) of the tire tread component (20) having had no discontinuities, and the tire casing component (30) having had a casing profile with at least one casing groove (35) with a casing groove depth, and wherein the substantially smooth back side (24) of the tire tread component (20) faced the tire casing component (30) and wherein the at least one tread groove (25) was aligned with the at least one casing groove (35).

11. The retreaded tire recited in claim 10, wherein the tire assembly was cured under pressure, wherein the tread back side (24) conformed to the casing profile whereby the at least one tread groove (25) conformed to the shape of the casing groove (35) such that the final tread groove depth (d_{f}) is greater than the pre-assembly tread groove depth.

12. The retreaded tire recited in claim 10, wherein the tire assembly included a bonding material between the tire tread (20) and the tire casing (30) when the tire assembly was cured under pressure.

13. The retreaded tire recited in claim 10, wherein the casing groove depth is less than 3.97 mm (5/32"), wherein the pre-assembly tire tread groove (25) depth is between 7.14 mm (9/32") and 20.6 mm (26/32"), and wherein the final tread groove depth (d_{f}) is between 8.73 mm (11/32") and 22.2 mm (28/32").

14. The retreaded tire recited in claim 10, wherein the pre-assembly tire tread groove (25) depth is 11.1 mm (14/32") and wherein the final tread groove depth (d_{f}) is 12.7 mm (16/32").

15. The retreaded tire recited in claim 10, wherein the at least one casing groove (35) and the at least one tread groove (25) are circumferential grooves, and wherein the tire tread (20) includes at least one lateral groove.

16. A system for retreading a tire, the system comprising:
a vessel;
a pressure source operable to increase pressure within the vessel;
a heat source operable to increase a temperature within the vessel; and a tire assembly including:
a tire tread (20) having a substantially smooth back side (24) and at least one tread groove (25) on a front side, the substantially smooth profile on the back side (24) of the tire tread (20) having no discontinuities, the at least one tread groove (25) having an initial tread groove depth (dᵢ), and
a tire casing (30) having a casing profile with at least one casing groove (35), said at least one casing groove (35) having a casing groove depth, and
wherein the tire tread (20) is positioned on the tire casing (30) such that the substantially smooth back side (24) of the tire tread (20) faces the tire casing (30) and the at least one tread groove (25) is aligned with the at least one casing groove (35); and
wherein the pre-cure tire assembly is provided in the vessel and the pressure and temperature are increased, the tread back side (24) is operable to conform to the casing profile and the shape of the casing groove (35) in a manner such that a final depth (d_{f}) of the tread groove (25) is greater than the initial tread groove depth (dᵢ).

17. The system recited in claim 16, wherein the vessel is an autoclave.

18. The system recited in claim 16, wherein the casing groove depth is less than 3.97 mm (5/32"), wherein the initial tread groove depth (dᵢ) is between 7.14 mm (9/32") and 20.6 mm (26/32"), and wherein the final depth (d_{f}) of the tread groove (25) is between 8.73 mm (11/32") and 22.2 mm (28/32").

19. The system recited in claim 16, wherein the initial tread groove depth (dᵢ) is 11.1 mm (14/32") and wherein the final depth (d_{f}) of the tread groove (25) is 12.7 mm (16/32").

20. The system recited in claim 16, wherein the at least one casing groove (35) and the at least one tread groove (25) are circumferential grooves, and wherein the tire tread (20) includes at least one lateral groove.

## Patentansprüche

1. Verfahren zum Runderneuern eines Reifens, wobei das Verfahren Folgendes umfasst:
Bereitstellen einer Reifenkarkasse (30), die ein Karkassenprofil mit mindestens einer Karkassenrille (35) aufweist, wobei die mindestens eine Karkassenrille (35) eine Karkassenrillentiefe und eine Karkassenrillenform aufweist;
Bereitstellen einer Reifenlauffläche (20) mit einem im Wesentlichen glatten Profil auf einer Rückseite (24) und mindestens einer Laufflächenrille (25) auf einer Vorderseite, wobei die mindestens eine Laufflächenrille (25) eine anfängliche Laufflächenrillentiefe (di) aufweist, wobei das im Wesentlichen glatte Profil auf der Rückseite (24) der Reifenlauffläche (20) keine Unterbrechungen aufweist;
Ausrichten der Reifenlauffläche (20) auf der Reifenkarkasse (30), um eine Reifenanordnung herzustellen, wobei das im Wesentlichen glatte Profil auf der Rückseite (24) der Reifenlauffläche (20) der Reifenkarkasse (30) zugewandt ist und wobei die mindestens eine Laufflächenrille (25) auf der Vorderseite der Reifenlauffläche (20) an der mindestens einen Karkassenrille (35) ausgerichtet ist;
Vulkanisieren der Reifenanordnung unter Druck, sodass sich die Rückseite (24) der Reifenlauffläche (20) mindestens einem Abschnitt des Karkassenprofils anpasst, wodurch sich die mindestens eine Laufflächenrille (25) der Karkassenrillentiefe und der Karkassenrillenform anpasst, sodass eine Endtiefe (df) der Laufflächenrille (25) größer als die anfängliche Laufflächenrillentiefe (di) ist.

2. Verfahren nach Anspruch 1, wobei die mindestens eine Karkassenrille (35) und die mindestens eine Laufflächenrille (25) Umfangsrillen sind und wobei die Reifenlauffläche (20) mindestens eine Querrille einschließt.

3. Verfahren nach Anspruch 1, ferner einschließend das Abrauen einer Reifenkarkasse, um die Reifenkarkasse (30) herzustellen, die das Karkassenprofil mit mindestens einer Karkassenrille (35) aufweist.

4. Verfahren nach Anspruch 1, ferner einschließend das Platzieren eines Bindematerials zwischen der Reifenkarkasse (30) und der Reifenlauffläche (20) vor dem Vulkanisieren.

5. Verfahren nach Anspruch 4, wobei das Vulkanisieren unter Druck das Erhöhen von Druck und Temperatur einschließt, sodass das Bindematerial die Befestigung der Reifenlauffläche (20) an der Reifenkarkasse (30) erleichtert.

6. Verfahren nach Anspruch 1, wobei eine Dicke der Reifenlaufflächenrille (25) zwischen einem Boden der Reifenlaufflächenrille (25) und der Rückseite (24) dünner wird, wenn sich die Laufflächenrückseite (24) dem Karkassenprofil anpasst.

7. Verfahren nach Anspruch 1, wobei die Karkassenrillentiefe weniger als 3,97 mm (5/32") beträgt.

8. Verfahren nach Anspruch 7, wobei die Endtiefe (d_{f}) der Laufflächenrille (25) zwischen 8,74 mm (11/32") und 22,2 mm (28/32") beträgt.

9. Verfahren nach Anspruch 7, wobei die anfängliche Laufflächenrillentiefe (dᵢ) 11,1 mm (14/32") beträgt und wobei die Endtiefe (d_{f}) der Laufflächenrille (25) 12,7 mm (16/32") beträgt.

10. Runderneuerter Reifen, umfassend:
eine Reifenkarkasse (30), die Seitenwände einschließt;
eine Reifenlauffläche (20), die an der Reifenkarkasse (30) vulkanisiert ist, wobei die Reifenlauffläche (20) eine endgültige Laufflächenrillentiefe (d_{f}) aufweist, die größer als eine anfängliche Reifenlaufflächenrillentiefe (dᵢ) ist,
wobei die Reifenlauffläche (20) mit der Reifenkarkasse (30) durch Vulkanisieren einer Reifenanordnung unter Druck verbunden wurde, wobei eine solche Anordnung mindestens ein Reifenkarkassenbauteil (30) und ein Reifenlaufflächenbauteil (20) einschließt, wobei das Reifenlaufflächenbauteil (20) ein im Wesentlichen glattes Profil auf einer Rückseite (24) und mindestens eine Laufflächenrille (25) auf einer Vorderseite mit einer anfänglichen Reifenlaufflächenrillentiefe (di) aufwies, wobei das im Wesentlichen glatte Profil auf der Rückseite (24) des Reifenlaufflächenbauteils (20) keine Unterbrechungen aufwies, und wobei das Reifenkarkassenbauteil (30) ein Karkassenprofil mit mindestens einer Karkassenrille (35) mit einer Karkassenrillentiefe aufwies, und wobei die im Wesentlichen glatte Rückseite (24) des Reifenlaufflächenbauteils (20) dem Reifenkarkassenbauteil (30) zugewandt war und wobei die mindestens eine Laufflächenrille (25) an der mindestens einen Karkassenrille (35) ausgerichtet war.

11. Runderneuerter Reifen nach Anspruch 10, wobei die Reifenanordnung unter Druck vulkanisiert wurde, wobei sich die Laufflächenrückseite (24) an das Karkassenprofil angepasst hat, wodurch sich die mindestens eine Laufflächenrille (25) an die Form der Karkassenrille (35) angepasst hat, sodass die endgültige Laufflächenrillentiefe (d_{f}) größer als die Laufflächenrillentiefe vor dem Zusammenbau ist.

12. Runderneuerter Reifen nach Anspruch 10, wobei die Reifenanordnung ein Bindematerial zwischen der Reifenlauffläche (20) und der Reifenkarkasse (30) einschloss, als die Reifenanordnung unter Druck vulkanisiert wurde.

13. Runderneuerter Reifen nach Anspruch 10, wobei die Karkassenrillentiefe weniger als 3,97 mm (5/32") beträgt, wobei die Tiefe der Reifenlaufflächenrille (25) vor dem Zusammenbau zwischen 7,14 mm (9/32") und 20,6 mm (26/32") beträgt und wobei die endgültige Laufflächenrillentiefe (d_{f}) zwischen 8,73 mm (11/32") und 22,2 mm (28/32") beträgt.

14. Runderneuerter Reifen nach Anspruch 10, wobei die Tiefe der Reifenlaufflächenrille (25) vor dem Zusammenbau 11,1 mm (14/32") beträgt und wobei die endgültige Laufflächenrillentiefe (d_{f}) 12,7 mm (16/32") beträgt.

15. Runderneuerter Reifen nach Anspruch 10, wobei die mindestens eine Karkassenrille (35) und die mindestens eine Laufflächenrille (25) Umfangsrillen sind und wobei die Reifenlauffläche (20) mindestens eine Querrille einschließt.

16. System zum Runderneuern eines Reifens, wobei das System Folgendes umfasst:
ein Gefäß;
eine Druckquelle, die einsetzbar ist, um den Druck innerhalb des Gefäßes zu erhöhen;
eine Wärmequelle, die einsetzbar ist, um eine Temperatur innerhalb des Gefäßes zu erhöhen; und eine Reifenanordnung, die Folgendes einschließt:
eine Reifenlauffläche (20) mit einer im Wesentlichen glatten Rückseite (24) und mindestens einer Laufflächenrille (25) auf einer Vorderseite, wobei das im Wesentlichen glatte Profil auf der Rückseite (24) der Reifenlauffläche (20) keine Unterbrechungen aufweist, wobei die mindestens eine Laufflächenrille (25) eine anfängliche Laufflächenrillentiefe (dᵢ) aufweist, und
eine Reifenkarkasse (30) mit einem Karkassenprofil mit mindestens einer Karkassenrille (35), wobei die mindestens eine Karkassenrille (35) eine Karkassenrillentiefe aufweist, und
wobei die Reifenlauffläche (20) so auf der Reifenkarkasse (30) positioniert ist, dass die im Wesentlichen glatte Rückseite (24) der Reifenlauffläche (20) der Reifenkarkasse (30) zugewandt ist und die mindestens eine Laufflächenrille (25) an der mindestens einen Karkassenrille (35) ausgerichtet ist; und
wobei die Reifenanordnung vor dem Vulkanisieren in dem Behälter bereitgestellt ist und der Druck und die Temperatur erhöht werden, wobei die Laufflächenrückseite (24) einsetzbar ist, sich dem Karkassenprofil und der Form der Karkassenrille (35) in einer Weise anzupassen, dass eine Endtiefe (d_{f}) der Laufflächenrille (25) größer als die anfängliche Laufflächenrillentiefe (dᵢ) ist.

17. System nach Anspruch 16, wobei das Gefäß ein Autoklav ist.

18. System nach Anspruch 16, wobei die Karkassenrillentiefe weniger als 3,97 mm (5/32") beträgt, wobei die anfängliche Laufflächenrillentiefe (dᵢ) zwischen 7,14 mm (9/32") und 20,6 mm (26/32") beträgt und wobei die Endtiefe (d_{f}) der Laufflächenrille (25) zwischen 8,73 mm (11/32") und 22,2 mm (28/32") beträgt.

19. System nach Anspruch 16, wobei die anfängliche Laufflächenrillentiefe (dᵢ) 11,1 mm (14/32") beträgt und wobei die Endtiefe (d_{f}) der Laufflächenrille (25) 12,7 mm (16/32") beträgt.

20. System nach Anspruch 16, wobei die mindestens eine Karkassenrille (35) und die mindestens eine Laufflächenrille (25) Umfangsrillen sind und wobei die Reifenlauffläche (20) mindestens eine Querrille einschließt.

## Revendications

1. Procédé de rechapage d'un pneumatique, le procédé comprenant :
la fourniture d'une carcasse de pneumatique (30) ayant un profil de carcasse avec au moins une rainure de carcasse (35), ladite au moins une rainure de carcasse (35) ayant une profondeur de rainure de carcasse et une forme de rainure de carcasse ;
la fourniture d'une bande de roulement de pneu (20) ayant un profil sensiblement lisse sur un côté arrière (24) et au moins une rainure de bande de roulement (25) sur un côté avant, l'au moins une rainure de bande de roulement (25) ayant une profondeur de rainure de bande de roulement initiale (di), le profil sensiblement lisse sur le côté arrière (24) de la bande de roulement de pneu (20) n'ayant pas de discontinuités ;
l'alignement de la bande de roulement de pneu (20) sur la carcasse de pneumatique (30) pour produire un ensemble de pneumatique, dans lequel le profil sensiblement lisse sur le côté arrière (24) de la bande de roulement de pneu (20) fait face à la carcasse de pneumatique (30) et dans lequel l'au moins une rainure de bande de roulement (25) sur le côté avant de la bande de roulement de pneu (20) est alignée avec l'au moins une rainure de carcasse (35) ;
le durcissement de l'ensemble de pneumatique sous pression de telle sorte que le côté arrière (24) de la bande de roulement de pneu (20) se conforme à au moins une partie du profil de carcasse de telle manière que l'au moins une rainure de bande de roulement (25) se conforme à la profondeur de rainure de carcasse et à la forme de rainure de carcasse de telle sorte qu'une profondeur finale (d_{f}) de la rainure de bande de roulement (25) est supérieure à la profondeur de rainure de bande de roulement initiale (dᵢ).

2. Procédé énoncé dans la revendication 1, dans lequel l'au moins une rainure de carcasse (35) et l'au moins une rainure de bande de roulement (25) sont des rainures circonférentielles, et dans lequel la bande de roulement de pneu (20) inclut au moins une rainure latérale.

3. Procédé énoncé dans la revendication 1, incluant en outre le polissage d'une carcasse de pneumatique pour produire la carcasse de pneumatique (30) ayant le profil de carcasse avec au moins une rainure de carcasse (35).

4. Procédé énoncé dans la revendication 1, incluant en outre le placement d'un matériau de liaison entre la carcasse de pneumatique (30) et la bande de roulement de pneu (20) avant le durcissement.

5. Procédé énoncé dans la revendication 4, dans lequel le durcissement sous pression inclut l'augmentation de la pression et de la température de telle sorte que le matériau de liaison facilite la fixation de la bande de roulement de pneu (20) à la carcasse de pneumatique (30).

6. Procédé énoncé dans la revendication 1, dans lequel une épaisseur de la rainure de bande de roulement de pneu (25) entre un fond de la rainure de bande de roulement de pneu (25) et le côté arrière (24) devient plus mince lorsque le côté arrière de bande de roulement (24) se conforme au profil de carcasse.

7. Procédé énoncé dans la revendication 1, dans lequel la profondeur de rainure de carcasse est inférieure à 3,97 mm (5/32").

8. Procédé énoncé dans la revendication 7, dans lequel la profondeur finale (d_{f}) de la rainure de bande de roulement (25) est comprise entre 8,74 mm (11/32") et 22,2 mm (28/32").

9. Procédé énoncé dans la revendication 7, dans lequel la profondeur de rainure de bande de roulement initiale (dᵢ) est de 11,1 mm (14/32"), et dans lequel la profondeur finale (d_{f}) de la rainure de bande de roulement (25) est de 12,7 mm (16/32").

10. Pneumatique rechapé comprenant :
une carcasse de pneumatique (30) incluant des parois latérales ;
une bande de roulement de pneu (20) durcie sur la carcasse de pneumatique (30), la bande de roulement de pneu (20) ayant une profondeur de rainure de bande de roulement finale (d_{f}) supérieure à une profondeur de rainure de bande de roulement initiale (dᵢ),
dans lequel la bande de roulement de pneu (20) a été jointe à la carcasse de pneumatique (30) en durcissant un ensemble de pneumatique sous pression, un tel ensemble ayant inclus au moins un composant de carcasse de pneumatique (30) et un composant de bande de roulement de pneu (20), le composant de bande de roulement de pneu (20) ayant eu un profil sensiblement lisse sur un côté arrière (24) et au moins une rainure de bande de roulement (25) sur un côté avant avec une profondeur de rainure de bande de roulement de pneu initiale (dᵢ), le profil sensiblement lisse sur le côté arrière (24) du composant de bande de roulement de pneu (20) n'ayant pas eu de discontinuités, et le composant de carcasse de pneumatique (30) ayant eu un profil de carcasse avec au moins une rainure de carcasse (35) avec une profondeur de rainure de carcasse, et dans lequel le côté arrière sensiblement lisse (24) du composant de bande de roulement de pneu (20) faisait face au composant de carcasse de pneumatique (30) et dans lequel l'au moins une rainure de bande de roulement (25) était alignée avec l'au moins une rainure de carcasse (35).

11. Pneumatique rechapé énoncé dans la revendication 10, dans lequel l'ensemble de pneumatique a été durci sous pression, dans lequel le côté arrière de bande de roulement (24) s'est conformé au profil de carcasse de telle manière que l'au moins une rainure de bande de roulement (25) s'est conformée à la forme de la rainure de carcasse (35) de telle sorte que la profondeur de rainure de bande de roulement finale (d_{f}) est supérieure à la profondeur de rainure de bande de roulement de pré-ensemble.

12. Pneumatique rechapé énoncé dans la revendication 10, dans lequel l'ensemble de pneumatique incluait un matériau de liaison entre la bande de roulement de pneu (20) et la carcasse de pneumatique (30) lorsque l'ensemble de pneumatique a été durci sous pression.

13. Pneumatique rechapé énoncé dans la revendication 10, dans lequel la profondeur de rainure de carcasse est inférieure à 3,97 mm (5/32"), dans lequel la profondeur de rainure de bande de roulement de pneu de pré-ensemble (25) est comprise entre 7,14 mm (9/32") et 20,6 mm (26/32"), et dans lequel la profondeur de rainure de bande de roulement finale (d_{f}) est comprise entre 8,73 mm (11/32") et 22,2 mm (28/32").

14. Pneumatique rechapé énoncé dans la revendication 10, dans lequel la profondeur de rainure de bande de roulement de pneu de pré-ensemble (25) est de 11,1 mm (14/32") et dans lequel la profondeur de rainure de bande de roulement finale (d_{f}) est de 12,7 mm (16/32").

15. Pneumatique rechapé énoncé dans la revendication 10, dans lequel l'au moins une rainure de carcasse (35) et l'au moins une rainure de bande de roulement (25) sont des rainures circonférentielles, et dans lequel la bande de roulement de pneu (20) inclut au moins une rainure latérale.

16. Système de rechapage d'un pneumatique, le système comprenant :
un récipient ;
une source de pression actionnable pour augmenter la pression à l'intérieur du récipient ;
une source de chaleur actionnable pour augmenter une température à l'intérieur du récipient ; et un ensemble de pneumatique incluant :
une bande de roulement de pneu (20) ayant un côté arrière sensiblement lisse (24) et au moins une rainure de bande de roulement (25) sur un côté avant, le profil sensiblement lisse sur le côté arrière (24) de la bande de roulement de pneu (20) n'ayant pas de discontinuités, l'au moins une rainure de bande de roulement (25) ayant une profondeur de rainure de bande de roulement initiale (dᵢ), et
une carcasse de pneumatique (30) ayant un profil de carcasse avec au moins une rainure de carcasse (35), ladite au moins une rainure de carcasse (35) ayant une profondeur de rainure de carcasse, et
dans lequel la bande de roulement de pneu (20) est positionnée sur la carcasse de pneumatique (30) de telle sorte que le côté arrière sensiblement lisse (24) de la bande de roulement de pneu (20) fait face à la carcasse de pneumatique (30) et l'au moins une rainure de bande de roulement (25) est alignée avec l'au moins une rainure de carcasse (35) ; et
dans lequel l'ensemble de pneumatique pré-durcissement est fourni dans le récipient et la pression et la température sont augmentées, le côté arrière de bande de roulement (24) est actionnable pour se conformer au profil de carcasse et à la forme de la rainure de carcasse (35) de telle manière qu'une profondeur finale (d_{f}) de la rainure de bande de roulement (25) est supérieure à la profondeur de rainure de bande de roulement initiale (dᵢ).

17. Système énoncé dans la revendication 16, dans lequel le récipient est un autoclave.

18. Système énoncé dans la revendication 16, dans lequel la profondeur de rainure de carcasse est inférieure à 3,97 mm (5/32"), dans lequel la profondeur de rainure de bande de roulement initiale (dᵢ) est comprise entre 7,14 mm (9/32") et 20,6 mm (26/32"), et dans lequel la profondeur finale (d_{f}) de la rainure de bande de roulement (25) est comprise entre 8,73 mm (11/32") et 22,2 mm (28/32").

19. Système énoncé dans la revendication 16, dans lequel la profondeur de rainure de bande de roulement initiale (dᵢ) est de 11,1 mm (14/32"), et dans lequel la profondeur finale (d_{f}) de la rainure de bande de roulement (25) est de 12,7 mm (16/32").

20. Système énoncé dans la revendication 16, dans lequel l'au moins une rainure de carcasse (35) et l'au moins une rainure de bande de roulement (25) sont des rainures circonférentielles, et dans lequel la bande de roulement de pneu (20) inclut au moins une rainure latérale.
